# EUROPÄISCHE PATENTSCHRIFT

(11) **EP 3 746 864 B1**
(45) Veröffentlichungstag und Bekanntmachung des Hinweises auf die Patenterteilung: **12.10.2022**
(21) Anmeldenummer: 19702855.8
(22) Anmeldetag: 30.01.2019
(51) Int. Cl.: G06F 1/02

(54) **HOCHFREQUENZSIGNAL-STIMULATOR-SYSTEM**
RADIO FREQUENCY STIMULATOR SYSTEM
SYSTEME DE SIGNAL DE HAUTE FREQUENCE STIMULATEUR

(30) Priorität: 31.01.2018 DE 102018201473
(43) Veröffentlichungstag der Anmeldung: 09.12.2020
(73) Patentinhaber: Innovationszentrum für Telekommunikationstechnik GmbH IZT, 91058 Erlangen (DE)
(72) Erfinder: PERTHOLD, Rainer, 91085 Weisendorf (DE)
(74) Vertreter: Pfitzner, Hannes
(86) Internationale Anmeldenummer: PCT/EP2019/052234
(87) Internationale Veröffentlichungsnummer: WO 2019/149745

(56) Entgegenhaltungen:
- WO-A2-2008/031504
- DE-A1-102015 215 222
- RAINER PERTHOLD ET AL: "A high performance digital channel simulator for satellite transmissions", 2008 10TH INTERNATIONAL WORKSHOP ON SIGNAL PROCESSING FOR SPACE COMMUNICATIONS (SPSC); 6-8 OCTOBER 2008; RHODES ISLAND, GREECE, IEEE, PISCATAWAY, NJ, USA, 6. Oktober 2008 (2008-10-06), Seiten 1-6, XP031365879, ISBN: 978-1-4244-2572-3

## Beschreibung

Ausführungsbeispiele der vorliegenden Erfindung beziehen sich auf ein Hochfrequenzsignal-Stimulator-System sowie auf ein entsprechendes Verfahren zum Stimulieren eines Hochfrequenzsignals.

Hochfrequenzsignalerzeugungen sind beispielsweise in der WO 2008/031504 A2 oder der DE 10 2015 215222 A1 offenbart. Hierbei werden mehrere Einzelsignale abgerufen und nach ihrer Erzeugung kombiniert. Des Weiteren ist auf die Veröffentlichung von Rainer Perthold mit dem Titel "A High Perfomance Digital Channel Simulator for Satellite Transmissions" hinzuweisen.

Hochfrequenzsignale können mittels eines Stimulators erzeugt werden. Aufgrund der Bandbreite von derartigen Hochfrequenzsignalen (z. B. zwischen 20 MHz und 3000 MHz) wird im Stand der Technik der Gesamtfrequenzbereich in feste Frequenzblöcke zu beispielsweise je 120 MHz aufgeteilt. Jedem dieser Frequenzblöcke wird ein Emitter zugeordnet. Bei den bestehenden Stand-der-Technik-Systemen werden z. B. 127 Exciter verwendet, die beispielsweise auf sechs DSP-Karten verteilt sind. Diese sechs DSP-Karten werden parallel betrieben und erhalten alle von einem Datenserver Informationen bezüglich der zu erzeugenden Daten in digitaler Form.

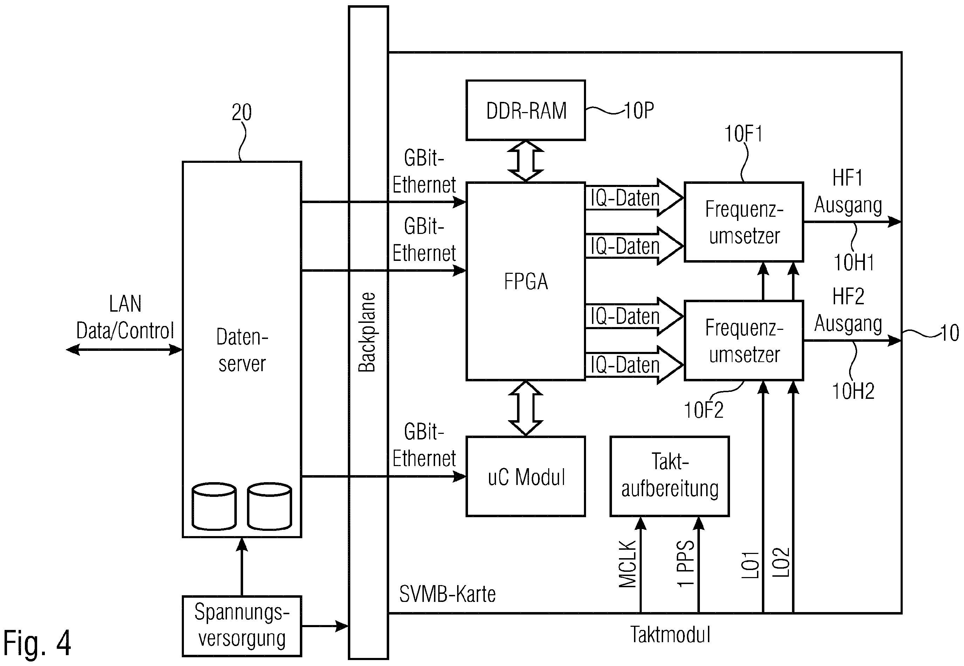

In Fig. 4 ist schematisch diese Architektur dargestellt. Fig. 4 zeigt ein Blockschaltbild einer DSP-Karte 10, die von einem Datenserver 20 beispielsweise über GBit-Ethernet Daten bezüglich der zu generierenden analogen Signale erhält. Die DSP umfasst als zentrale Einheiten einen Prozessor 10P, hier ist z. B. ein FPGA, sowie zwei Frequenzumsetzer 10F1 und 10F2. Der Prozessor 10P generiert auf Basis der von dem Datenserver 20 erhaltenen Daten IQ-Signale, mittels welchen die Frequenzumsätze 10F1 und 10F2 gespeist werden. Jeder dieser Frequenzumsetzer 10F1 und 10F2 ist einem bestimmten Frequenzband zugeordnet und erzeugt in diesem Frequenzband ausgehend von den erhaltenen IQ-Daten Analogsignale, die über die HF-Ausgänge 10H1 und 10H2 ausgegeben werden. Durch diese Architektur ist es möglich, dass jeder der Emitter 10F1 und 10F2 Delay, Phase, Amplitude und Frequenz unabhängig voneinander dynamisch ändern kann.

Die hier dargestellte Architektur des Stimulators ist auf kontinuierliche Signale mit beispielsweise einer Dauer einer Größenordnung von Sekunden ausgerichtet, was sich auch in den möglichen Abtastraten und Signalbandbreiten widerspiegelt. Zusätzlich weist die hier dargestellte Architektur einen z. B. 4 Gigabyte großen RAM-Speicher 10S, der Daten puffert, um beispielsweise Nachteile einer begrenzten Bandbreite beim Streamen zumindest teilweise zu kompensieren. Ausgehend von dem hierdurch dargestellten System besteht der Bedarf nach größeren Frequenzbereichen, größerer Echtzeitbandbreite und höherer Dynamik.

Weiterhin ist im Anwendungsbereich der Radarsimulation (Generierung einer Vielzahl von HF-Pulsen auf unterschiedlichen Pegeln) gängig, eine geringe Anzahl von analogen Steuersendern, die schnell die Sendefrequenz wechseln können im Zeitmultiplex zu betreiben.

Deshalb ist es die Aufgabe der vorliegenden Erfindung, einen Signalstimulator zu schaffen, der einen verbesserten Kompromiss aus Frequenzbereich, Echtzeitbandbreite, Dynamikanforderung und Bedienbarkeit bietet.

Die Aufgabe wird durch den Gegenstand der unabhängigen Patentansprüche gelöst. Die Erfindung ist durch die unabhängigen Ansprüche definiert. Vorteilhafte Ausgestaltungen ergeben sich durch die abhängigen Ansprüche.

Ausführungsbeispiele der vorliegenden Erfindung schaffen ein Hochfrequenzsignal-Stimulator-System mit mindestens zwei voneinander unabhängigen Datenerzeugern, einer Signalverarbeitung und einem Signalgenerator. Die mindestens zwei voneinander unabhängigen Datenerzeuger, z.B. zwei im Netzwerk verteilte PCs, sind jeweils ausgebildet, um zumindest ein ein zu erzeugendes Hochfrequenzsignal beschreibendes Datenpaket zu erzeugen. Die Signalverarbeitung ist ausgebildet, einen Inhalt des von dem ersten der mindestens zwei voneinander unabhängigen Datenerzeugern erzeugten Datenpakets und einen Inhalt des von dem zweiten der mindestens zwei voneinander unabhängigen Datenerzeugern erzeugten Datenpakets zu extrahieren. Der Signalgenerator ist ausgebildet, um auf Basis der extrahierten Inhalte ein Hochfrequenzsignal zu erzeugen.

Ausführungsbeispielen der vorliegenden Erfindung liegt die Erkenntnis zugrunde, dass ausgehend von einem Hochfrequenzsignal-Stimulator bei der Signalgenerierung eine vorgelagerte Signalverarbeitung, die ausgebildet ist, erhaltene Daten zu sortieren und diesen einem jeweiligen Kanal für die Interpolation und Analogsignalgenerierung zuzuordnen, es ermöglicht wird, dass die Datengenerierung (Daten bezüglich der mittels des Hochfrequenzsignal-Stimulators zu erzeugenden Hochfrequenzsignale) verteilt erfolgen kann. Die Vorverarbeitung erfolgt im Wesentlichen in Echtzeit, was den Vorteil bietet, dass so nicht mehr alle zu erzeugenden Daten vorab gepuffert werden müssen. Des Weiteren ermöglicht die Datenvorverarbeitung auch, dass eine wesentlich größere Anzahl an Emittern betrieben werden kann, da keine feste Zuordnung mehr existieren muss. Hierdurch kann dann auch eine Erweiterung des Frequenzbereichs und Echtzeitbandbreite realisiert werden.

Entsprechend weiteren Ausführungsbeispielen umfasst der Signalgenerator mehrere Frequenzbänder, über welche das Hochfrequenzsignal erzeugt wird. Diese Bänder können angrenzend oder überlappend sein. Hierzu kann entsprechend Ausführungsbeispielen der Signalgenerator zumindest zwei Signalgeneratoreinheiten für zumindest zwei Frequenzbänder umfassen. Anders ausgedrückt heißt das, dass jede Signalgeneratoreinheit ausgebildet ist, um das Hochfrequenzsignal in dem jeweiligen Frequenzband zu erzeugen, so dass sich durch die zwei von den Signalgeneratoreinheiten ausgegebenen Ausgangssignale das eine Hochfrequenzsignal zusammensetzen lässt. Hierzu kann, entsprechend weiteren Ausführungsbeispielen, ein sogenannter Filter-Combiner eingesetzt werden, der ausgebildet ist, um die Ausgangssignale von den zumindest zwei Signalgeneratoreinheiten zu kombinieren, so dass ein Hochfrequenzsignal mit einer Gesamtbandbreite erhalten wird. Die Gesamtbandbreite kann beispielsweise bzw. maximal die Summe der mindestens zwei Frequenzbänder sein. Wenn man von einem weiteren bevorzugten Ausführungsbeispiel ausgeht, entsprechend welchem die einzelnen Frequenzbänder überlappend angeordnet sind, ist die Gesamtbandbreite kleiner als die Summe, umfasst aber zumindest (inhaltlich) die mindestens zwei überlappenden Frequenzbänder. Entsprechend weiteren Ausführungsbeispielen kann der Signalgenerator je Frequenzband zwei oder mehr Signalgeneratoreinheiten umfassen. Je nach Bandbreite kann die Anzahl auch erheblich größer als zwei sein, wie z. B. 20 im C/D oder E-J-Band. Durch die Vielzahl der Signalgeneratoreinheiten kann der Frequenzbereich und die Echtzeitbandbreite deutlich vergrößert werden.

Entsprechend Ausführungsbeispielen umfasst jede Signalgeneratoreinheit zumindest einen Digital-Analog-Wandler oder auch eine Kombination aus einem Digital-Analog-Wandler mit einem Frequenzumsetzer. Der Digital-Analog-Wandler ist ausgebildet, um ausgehend von den Inhalten der erzeugten Datenpakete ein Analogsignal bereitzustellen, wobei der optionaler Weise nachgeschaltete Frequenzumsetzer dann das bereitgestellte Analogsignal in einen anderen Frequenzbereich transferiert. Zusätzlich kann entsprechend weiteren Ausführungsbeispielen in dem DA-Wandler oder dem Frequenzumsetzer eine Verstärkungs-Abschwächungs-Einheit vorgesehen sein, die ausgebildet ist, um die analogen Signale zu verstärken oder zu dämpfen. Hierdurch kann ein erhöhter Dynamikbereich erreicht werden.

Die vorgelagerte Signalverarbeitung ist entsprechend Ausführungsbeispielen ausgebildet, um beim Extrahieren der Inhalte (z. B. der IQ-Inhalte) einen Aussendezeitpunkt oder eine Signaldauer zu extrahieren und entsprechend dieser die Inhalte der Signalpakete anzuordnen, um einen kontinuierlichen Datenstrom auszugeben. Entsprechend Ausführungsbeispielen erfolgt durch die Signalverarbeitung ein Auffüllen der Lücken zwischen Einzelsignalen im Fall eines nichtkontinuierlichen Datenstroms. Hierdurch ist es dann möglich, dass sowohl Pulse als auch kontinuierliche Signale abgespielt werden. Entsprechend weiteren Ausführungsbeispielen extrahiert die Signalverarbeitung auch die enthaltenen Frequenzbereiche und ordnet entsprechend diesen die Digitalsignale den nachgelagerten Signalgeneratoreinheiten des Signalgenerators zu. Somit ist das Berücksichtigen von frequenzagilen Signalen möglich, die die Frequenzgrenzen zwischen zwei Blöcken überschreiten können.

Dieses Konzept ist sowohl auf Offline- als auch auf Online-Anwendungen übertragbar. Das heißt also, dass das Empfangen der Datenpakete, Sortieren und das Erzeugen des analogen Hochfrequenzsignals entweder in Realtime erfolgen kann oder auch unter Zuhilfenahme eines Speichers. Insofern kann entsprechend Ausführungsbeispielen das Hochfrequenzsignalstimulator-System bzw. die Signalverarbeitung einen Speicher umfassen, der ausgebildet ist, die empfangenen Datenpakete zu puffern und, nach Zuordnung, z.B. zum jeweiligen Band und/oder Time Slot, die Signale zu generieren.

Sofern bei der Simulation der Hochfrequenzsignale eine niedrige Latenz in Bezug auf die Steuerinformationen im Vordergrund steht, so können die Steuerinformation auch über einen separaten Kanal mit minimaler Latenz geführt werden. Der feste Zeitbezug zwischen Daten (IQ) und Steuerinformation (Pegel, Phasenlage) geht dabei in der Regel verloren. Diese Steuerinformationen können z.B. über die Datenpakete empfangen werden, die bei diesem Fall dann in erster Linie Metadaten und nicht zwingend IQ-Daten ümfassen. Die Signalverarbeitung ist also entsprechend Ausführungsbeispielen ausgebildet, die Metadaten als Steuerdaten (auch ohne IQ-Daten bzw. separat) direkt an den Signalgenerator weiterzuleiten, um die Latenzzeit gering zu halten.

Entsprechend Ausführungsbeispielen kann die Signalverarbeitung weiter ausgebildet sein, um die Inhalte der Datenpakete zu analysieren und gegebenenfalls zu interpolieren. Um dynamischer auf unterschiedliche Datenpaketanzahlen und Datenpaketumfänge reagieren zu können, kann entsprechend weiteren Ausführungsbeispielen die Signalverarbeitung ausgebildet sein, um mehrere virtuelle Exciter zu stimulieren und die Datenpakete entsprechend ihres Inhalts zu den virtuellen Excitern zuzuordnen. Ausgehend von den virtuellen Excitern werden dann die entsprechend zugeordneten Signalgeneratoreinheiten des Signalgenerators angesprochen. Entsprechend Ausführungsbeispielen ist es auch möglich, dass die Anzahl und/oder die Bandbreite der mehreren virtuellen Exciter während des Betriebs variiert wird.

An dieser Stelle sei angemerkt, dass entsprechend Ausführungsbeispielen beim Extrahieren bzw. beim Zuspielen der Daten zu dem Signalgenerator bzw. den Signalgeneratoreinheiten die Signalinhalte und die Signalbeschreibungen (Metadaten) getrennt verarbeiten werden können. So ist es entsprechend einem Ausführungsbeispiel möglich, dass der Signalerhalt und die Beschreibung getrennt zum Signalgenerator übermittelt werden oder entsprechend einem anderen Ausführungsbeispiel, dass diese zusammen dem Signalgenerator bereitgestellt werden können.

An dieser Stelle sei angemerkt, dass entsprechend Ausführungsbeispielen die Signalverarbeitung einen Prozessor oder ein FPGA umfasst, der auf Basis der von mehreren Signalquellen erhaltenen Datenpakete einen kontinuierlichen Datenstrom ausgibt. Um die mehreren Datenpakete von mehreren unabhängigen Datenerzeugern zu erhalten, kann die Signalverarbeitung zusätzlich einen Switch umfassen, über welche die zumindest zwei voneinander unabhängigen Datenerzeuger an die Signalverarbeitung angekoppelt sind.

Entsprechend Ausführungsbeispielen erzeugt jeder der zumindest zwei Datenerzeuger ein Datenpaket mit zumindest einem Element aus der Gruppe der Elemente umfassend IQ-Daten, eine Zieladresse, einen Frequenzbereich, einen Aussendezeitpunkt, eine Signaldauer und/oder einen Signalpegel. Jedes der Datenpakete kann beispielsweise ein Radar-Objekt beschreiben. An dieser Stelle sei auch angemerkt, dass entsprechend Ausführungsbeispielen es sich bei jedem Datenerzeuger beispielsweise um einen unabhängig betriebenen Computer/PC handeln kann.

Ein weiteres Ausführungsbeispiel schafft ein Verfahren zum Stimulieren eines Hochfrequenzsignals mit folgenden Schritten:
- Erzeugen von zumindest zwei Datenpaketen, wobei jedes Datenpaket ein zu erzeugendes Hochfrequenzsignal beschreibt, wobei das Erzeugen unabhängig voneinander passiert.
- Extrahieren der Inhalte der zumindest zwei Datenpakete und Erzeugen eines Hochfrequenzsignals auf Basis der extrahierten Inhalte unter Zuhilfenahme eines Signalgenerators. Das Verfahren kann entsprechend weiteren Ausführungsbeispielen auch die Verfahrensschritte des Anordnens der extrahierten Inhalte entsprechend den Aussendezeitpunkten und der Signaldauer und/oder des Zuordnens der Inhalte entsprechend ihrer Frequenzbereiche zumindest zwei Bänder umfassen.

Entsprechend weiteren Ausführungsbeispielen umfasst das Verfahren den Schritt des Zuordnens der Inhalte zu virtuellen Excitern. Entsprechend weiteren Ausführungsbeispielen umfasst das Verfahren den Schritt des Auffüllens von Lücken zwischen Einzelsignalen mit Nullen oder zumindest eines oder mehrere Frames im Falle eines nichtkontinuierlichen Datenstroms, um einen kontinuierlichen Datenstrom zu erzeugen.

Entsprechend einem weiteren Ausführungsbeispiel wird ein Computerprogramm geschaffen, das alle oder die Schritte des oben erläuterten Verfahrens ausführt.

Weiterbildungen sind in den Unteransprüchen definiert. Ausführungsbeispiele der vorliegenden Erfindung werden anhand der beiliegenden Zeichnungen erläutert. Es zeigen:
- Fig. 1a: ein schematisches Blockschaltbild eines Hochfrequenz-Stimulator-Systems gemäß einem Basisausführungsbeispiel;
- Fig. 1b: ein schematisches Blockschaltbild eines Hochfrequenz-Stimulator-Systems gemäß einem erweiterten Ausführungsbeispiel;
- Fig. 2a,2b: schematische Blockschaltbilder zur Illustration möglicher Implementierungen des Signalgenerators gemäß Ausführungsbeispielen;
- Fig. 3: ein schematisches Blockschaltbild zur Illustration der Implementierung der Signalverarbeitung gemäß einem Ausführungsbeispiel; und
- Fig. 4: eine schematische Darstellung einer Hochfrequenzsignal-Stimulator-Architektur gemäß dem Stand der Technik.

Bevor nachfolgend Ausführungsbeispiele der vorliegenden Erfindung anhand der beiliegenden Zeichnungen erläutert werden, sei darauf hingewiesen, dass gleichwirkende Elemente und Strukturen mit gleichen Bezugszeichen versehen sind, so dass die Beschreibung der aufeinander anwendbar bzw. austauschbar ist.

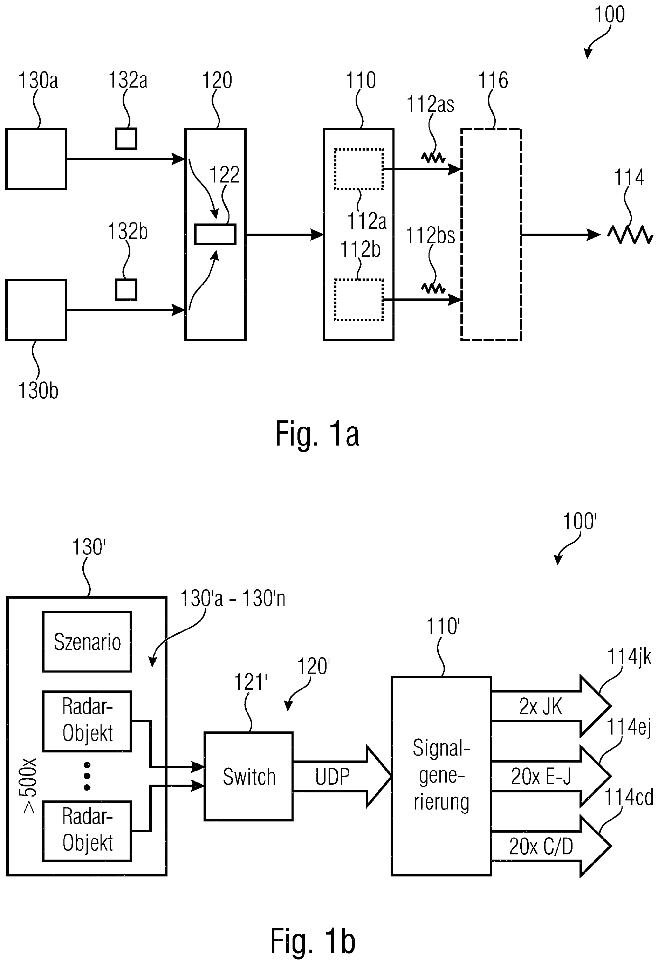

Fig. 1a zeigt ein System 100 zur Hochfrequenzsignalstimulation. Dieses umfasst in der Basiskonfiguration die drei Einheiten: Signalgenerator 110, eine vorgelagerte Signalverarbeitung 120 sowie zumindest zwei voneinander unabhängige Datenerzeuger 130a und 130b. Die unabhängigen Datenerzeuger 130a und 130b, wie z. B. zwei Computer geben jeweils ein Datenpaket 132a und 132b an die Signalverarbeitung 120 aus. Jedes der Datenpakete beschreibt ein zu erzeugendes Hochfrequenzsignal 114, kann also beispielsweise IQ-Daten, einen Frequenzbereich, eine Zieladresse, Aussendezeitpunkt, eine Signaldauer und/oder einen Signalpegel umfassen.

Die Signalverarbeitung 120 extrahiert die Inhalte der Datenpakete 132a und 132b und fügt diese zu beispielsweise einem Datenstrom 122 zusammen, bei welchem die durch die Datenpakete 132a und 132b beschriebenen zu erzeugenden Signale entsprechend ihren Aussendezeitpunkten, Dauer und Frequenzbereich sortiert/angeordnet sind. Dieser Datenstrom 120 umfasst also die IQ-Daten in entsprechender Strukturierung und gegebenenfalls auch schon bereits nach Bändern aufgeteilt. Dieser Datenstrom 120 wird dann dem Signalgenerator 110 zur Verfügung gestellt, so dass dieser ausgehend hiervon ein Hochfrequenzsignal 114 zur Verfügung stellt.

An dieser Stelle sei angemerkt, dass die IQ-Daten bzw., um allgemein zu bleiben, die Datenpakete sowohl von der unabhängigen Datenerzeugung 130a und 130b getrennt angeliefert werden können, als auch bereits vorliegen können, z.B. in gepufferter Weise in einem Speicher.

Entsprechend weiteren Ausführungsbeispielen kann der Signalgenerator 110 mehrere Signalgeneratoreinheiten 112a und 112b Umfassen. Jeder dieser Signalgenerator 112a und 112b ist für ein bestimmtes Frequenzband zuständig. Die Aufteilung auf die zwei Frequenzbänder zugeordnet zu den Signalgeneratoreinheiten 112a und 112b erfolgt durch die Vorverarbeitung 120. Entsprechend Ausführungsbeispielen ist selbstverständlich die Anzahl der Signalgeneratoreinheiten 112a und 112b nicht auf zwei beschränkt, so dass insgesamt noch mehr Bänder abgedeckt werden können oder innerhalb jedes Bands mehrere Signalgeneratoreinheiten vorgesehen sind. Entsprechend einem Ausführungsbeispiel geben die Signalgeneratoreinheiten 112a und 112b jeweils ein Signal im eigenen Frequenzband aus, das hier mit dem Bezugszeichen 112as und 112bs markiert ist. Diese zwei Signale 112as und 112bs werden in einem optionalen Filter-Combiner 116 verarbeitet, der ausgehend von den zwei oder mehr analoge Ausgangssignale 112as und 112bs in den zwei oder mehreren nebeneinander angeordneten bzw. teilweise überlappenden Frequenzbändern ein Gesamt-Hochfrequenzsignal 114 mit einer Gesamtbandbreite generiert. Diese Gesamtbandbreite kann beispielsweise aus der Summe der Einzelbandbreiten der Signale 112as und 112bs bestehen oder, falls sich die Signale überlappen, kleiner sein, wobei dann allerdings alle Inhalte der Ausgangssignale 112as und 112bs enthalten sind.

Das Datenpaket 132a umfasst entsprechend erste IQ-Daten, während das Datenpaket 132b zweite IQ-Daten umfasst. Sowohl die ersten als auch die zweiten (oder jedes allein) IQ-Daten können Inhalte / IQ-Daten zugehörig zu einem ersten und einem zweiten Frequenzband umfassen. Das erste Frequenzband wird entsprechend einem Ausführungsbeispiel durch eine erste Signalgeneratoreinheit 112a generiert, während das zweite Frequenzband durch eine zweite Signalgeneratoreinheit 112b generiert wird.

Entsprechend Ausführungsbeispielen erfolgt die Verteilung der IQ-Daten eines oder mehrere Datenpakete 132a/132b auf einzelne Frequenzbänder durch die Signalverarbeitung 120. Hierbei werden die IQ-Daten extrahiert und frequenzabhängig aufgeteilt. Das Resultat kann sein, dass auf eine Frequenzband sowohl ein Teil der ersten als auch der zweiten IQ-Daten geleitet werden.

Nachfolgend wird Bezug nehmend auf Fig. 1b ein weiteres Ausführungsbeispiel erläutert. Fig. 1b zeigt eine Architektur 100', mit einer Vielzahl an Datenquellen 130'a-n, bei denen es sich in diesem Ausführungsbeispiel jeweils um Radar-Objekte handelt. Alle Radar-Objekte 130'a-n (z. B. größer 500 Stück) werden getrennt generiert und an den Switch 121' der Teil der Signalverarbeitung 120' geliefert. Dieser Switch 121' führt, wie oben bereits erläutert, die Signalvorverarbeitung aus und liefert die so verarbeiteten Daten (vgl. UPW) an die Signalgenerierung 110'. Die einzelnen Blöcke 130', 120' bzw. 121' und 110' werden nachfolgend detailliert erläutert.

Der Block 130' symbolisiert die verteilte Datengenerierung. Hier erfolgt für jedes Radar-Objekt (vgl. 130'a bis 130'n) die Datengenerierung getrennt, z. B. mittels einer Software. Soll dem DUT ein Puls oder ein Signal eingespielt werden, so erzeugt die Software ein Datenpaket (Puls Word Descriptor) mit dem gewünschten Dateninhalt (z.B. IQ-Daten) und Metainformationen wie z. B. Pegel und Aussendezeitpunkt, etc. Die Datengenerierung kann verteilt auf unterschiedlichen Rechnern 130'a bis 130'n erfolgen.

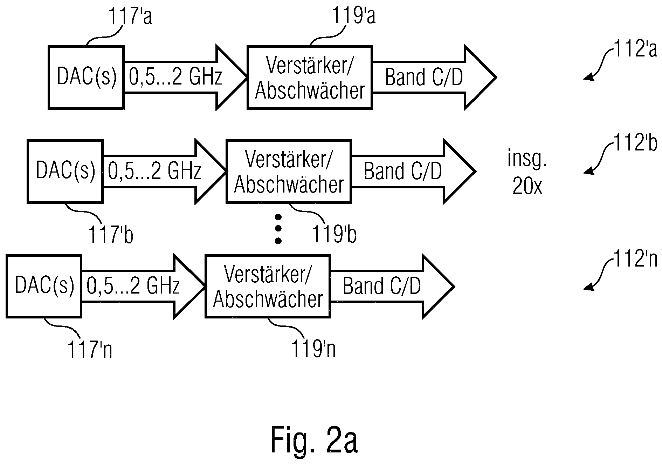

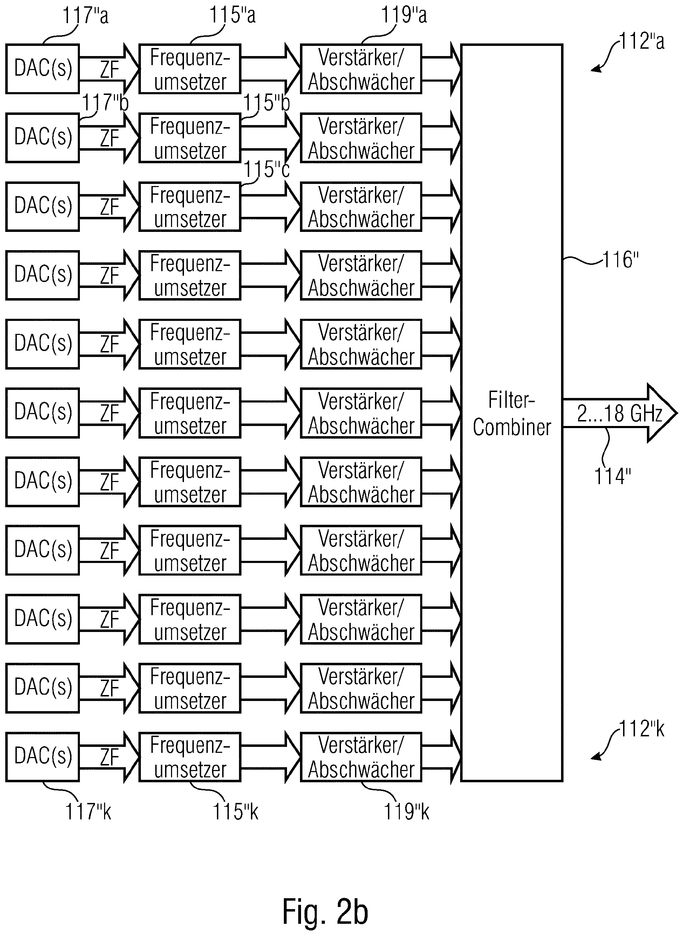

Über einen leistungsfähigen Netzwerkswitch 121-1 werden die Daten gesammelt und an die Signalerzeugung 110' geleitet. Hierzu erfolgt eine Signalvorverarbeitung in der Einheit 120', die entweder bei dem Switch 121' oder bei der Signalgenerierung 110' angeordnet sein kann. Die Signalverarbeitung 120' übernimmt die Sortierung der Pakete, weist sie einem Kanal für die Interpretation zu und schickt die entsprechenden Signale zu den DA-Umsetzern der Signalgenerierung 110'. Bei diesem Ausführungsbeispiel wird davon ausgegangen, dass die Signalgenerierung 110' mehrere Kanäle und damit auch mehrere DA-Umsetzer aufweist. Die Kanäle sind mit den Bezugszeichen 114JK, 114E-J und 114C/D gekennzeichnet. Durch lückenlos überlappende Frequenzblöcke 114JK, 114E-J und 114C/D stehen hier beispielsweise bis zu 22 GHz Echtzeitbandbreite zur Verfügung. Eine entsprechende Kalibriereinrichtung (nicht dargestellt) ermöglicht Messung und nachfolgende Korrektur der analogen Frequenzgänge dieses Systems. Nachfolgend wird der Hochfrequenzteil 110' im Detail Band für Band erläutert, wobei hier Bezug genommen wird auf die Fig. 2a und 2b, die mögliche Implementierungen der Signalgenerierung 110' darstellen.

Fig. 2a zeigt schematisch drei Signalgenerierungseinheiten 112'a bis 112'n. Jede dieser Signalgenerierungseinheiten 112'a bis 112'n ist in diesem Ausführungsbeispiel durch eine Kombination aus einem Digital-Analog-Wandler 117'a bis 117'n sowie einer optionalen Verstärkungs-Abschwächungs-Einheit 119'a bis 119'n gebildet. Die Signal-Verstärkungs-Abschwächungs-Einheiten 119'a bis 119'n sind dem jeweiligen Digital-Analog-Wandler 117'a bis 117'n nachgelagert. An dieser Stelle sei angemerkt, dass entsprechend weiteren Ausführungsbeispielen die Anzahl dieser Signalumsetzungseinheiten 112'a bis 112'n im Allgemeinen größer gleich 1, bevorzugt aber größer 2 (wie z. B. 20) betragen kann.

Die Anzahl variiert je nach geforderter Echtzeitbandbreite. Hier wird von einer gewünschten Echtzeitbandbreite von 1,5 GHz im Frequenzbereich von 0,5 bis 2 GHz (C- und D-Band) ausgegangen. Ausgehend von der eingesetzten DA-Umsetzung und insbesondere der spezifizierten spektralen Reinheit und des spezifizierten Signalrauschabstands ergibt sich eine mögliche Bandbreite je DA-Umsetzer 117'a bis 117'n, aus welcher Sicht sich dann für die gewünschte Echtzeitbandbreite die Anzahl ergibt. An dieser Stelle sei angemerkt, dass die hier dargestellte Signalgenerierung 112'a bis 112'n im C- und D-Band direkt und ohne weitere Signalumsetzung erfolgen kann, was eine optimale Signalqualität ermöglicht. Um dem geforderten Klangbereich Rechnung zu tragen, werden je HF-Pfad 112'a bis 112'n die Verstärkungs-Abschwächungs-Einheiten 119'a bis 119'n eingesetzt, die schnell schaltend ausgelegt sind und gemäß Ausführungsbeispielen direkt vom FPGA (Vorverarbeitung 120') angesteuert werden. Diese Verstärkungs-Abschwächungs-Einheiten 119'a bis 119'n stellen während der Dauer eines Pulses die Verstärkung ein. Sobald sich mehrere Pulse innerhalb eines Frequenzblocks zeitlich überlappen, bestimmt die Leistung des stärksten Pulses den Rauschgrund.

Fig. 2b zeigt eine mögliche Implementierung der Signalgenerierung 110' für das E-J-Band bzw. oder das JK-Band. Hier sind mit Signalgenerierung 110' beispielsweise 11 Signalgenerierungseinheiten 112"a bis 112"k vorgesehen. Jeder dieser Signalgenerierungseinheiten 112"a bis 112"k umfasst wiederum einen Digital-Analog-Wandler 117"a bis 117"k sowie die nachgeschalteten Verstärkungs-Abschwächungs-Einheiten 119"a. Zwischen den alten Einheiten 117"a bis 117"k sowie den Einheiten 119"a und 119"k sind Frequenzumsetzer 115"a sowie 115"k vorgesehen. Zusätzlich weist die hier dargestellte Signalgenerierung einen sogenannten Filter-Combiner 116" auf, der die insgesamt 11 Bänder zugehörig zu den Signalgenerierungseinheiten 112"a bis 112"k zu einem Ausgangssignal 114" kombiniert.

Bei der in Fig. 2b dargestellten Implementierung werden also die E-J-Bänder dadurch abgedeckt, dass mehrere (>3) der 1,5 GHz breiten Teilbändern nach einfacher analoger Frequenzumsetzung (vgl. DAC 117"a bis 117"k) mittels Filter-Combinern 116" zusammengefasst werden. Bevorzugterweise, aber nicht notwendigerweise überlappen sich die Teilbänder, so dass mittels digitaler Equalizer und dadurch der Signalverarbeitung eine lückenlose Echtzeitbandbreite (hier z.B. 16 GHz, nämlich von2 bis 18 GHz) entsteht. Die Überlappung ist anhand der Frequenzbänder, welche durch die Frequenzumsetzer 115"a bis 115"k ausgegeben werden (siehe Pfeil der Frequenzumsetzeinheit 15"a bis 150"k) zu erkennen. So überlappt sich beispielsweise das Frequenzband des Frequenzumsetzers 115"a (2 bis 3,5 GHz) mit dem Frequenzband des Frequenzumsetzers 115"b (3,45 bis 4,95 GHz) mit 0,05 oder allgemein mindestens 0,01 GHZ (max. 0,5Ghz), wobei sich dieses Band wiederum mit dem Band des Frequenzumsetzers 115"c (4,9 bis 6,4 GHz) überlappt. Der Filter-Combiner 116" kann entsprechend Ausführungsbeispielen wie folgt ausgeführt werden. Neben dem reinen Zusammenführen der Signale der Pfade 112"a bis 112"k kann entsprechend Ausführungsbeispielen der Filter-Combiner 116" auch ausgebildet sein Außerbandstörer und Außerbandrauschen zu dämpfen. Dies ermöglicht im Resultat eine hohe spektrale Reinheit des Ausgangssignals 114".

Das JK-Band wird entsprechend weiteren Ausführungsbeispielen analog durchgeführt, wobei dann ein Frequenzumsetzer nachgeschaltet sein kann, die Überlagerung mit den E-J-Baugruppen aber nach demselben Prinzip (Stichwort Filter-Combiner) erfolgt.

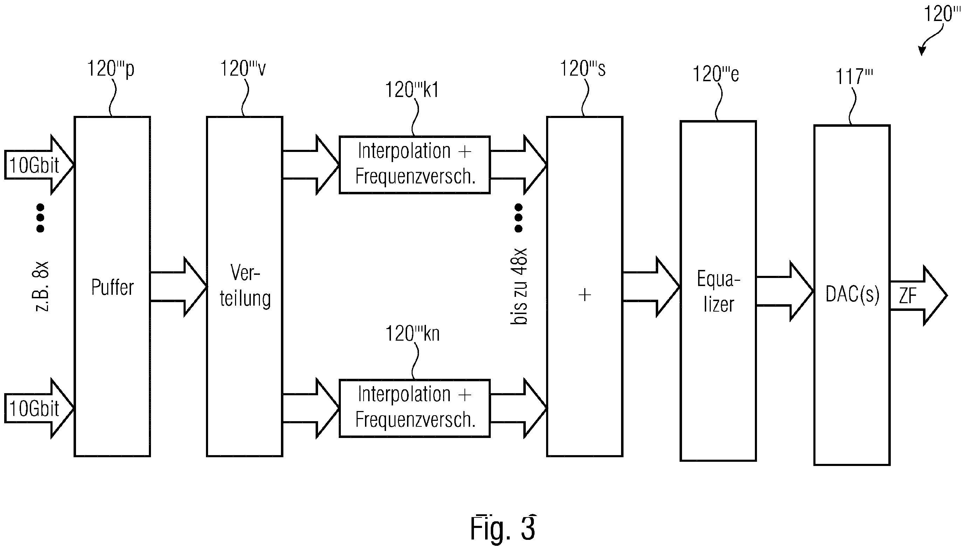

Bezugnehmend auf Fig. 3 wird nun die Signalverarbeitung, welche hier exemplarisch als FPGA implementiert sein kann, diskutiert. Fig. 3 zeigt eine Signalverarbeitung 120‴, die an die Digital-Analog-Wandler 117‴ das zu digitalisierende Signal ausgeben. Die Signalverarbeitung umfasst in der hier dargestellten Implementierung einen eingangsseitig angeordneten Puffer 120"'p, der z. B. über 18 Gigabit-Eingänge die Daten erhält. Diese UDP-Pakete werden über den Switch (nicht dargestellt) empfangen. Die Pufferung erfolgt gemäß dem FIFO-Prinzip mit mehreren Sekunden Speichertiefe. Ausgehend von dem Puffer werden dann die Daten in der Datenverteilung 120‴v verteilt. Hierbei erfolgt eine Verteilung in unterschiedliche Kanäle, die mit den Bezugszeichen 120‴k1 bis 120"'kn gekennzeichnet sind. Hierbei können beispielsweise bis zu 48 Kanäle oder sogar noch mehr Kanäle genutzt werden. Bei den Kanälen kann es sich beispielsweise um einen virtuellen Exciter handeln, der den geforderten Interpolationsfaktor aufweist und freie Kapazität hat. In den einzelnen Kanälen 120‴k1 bis 120"'kn erfolgt die Interpolation als auch die Frequenzverschiebung. Die so vorverarbeiteten Signale aus den einzelnen Kanälen 120‴k1 bis 120‴kn werden kann nach der Interpolation in der Einheit 120"'s aufsummiert und zu einem Ausgangssignal aufbereitet, das mit einem optionalen Equalizer 120‴e korrigiert werden kann, wobei hier insbesondere eine Korrektur des Frequenzgangs der Analogtechnik erfolgt sowie sichergestellt wird, dass eine korrekte Überlappung der benachbarten Frequenzblöcke vorliegt. Entsprechend Ausführungsbeispielen kann in der Einheit 120‴ auch ein Zählen der ankommenden PWDs nach ID erfolgen, so dass nachvollziehbar wird, wenn Datenpakete verworfen worden sind. Die Verteilung 120"'v ist entsprechend Ausführungsbeispielen dazu ausgebildet, um die Metadaten der PWDs auszulesen und den einzelnen Excitern 120‴k1 bis 120‴kn zuzuordnen. Außerdem erfolgt eine entsprechende Parametrierung der Signalverarbeitung und der Hardware in Echtzeit.

Ausgehend von zwei virtuellen Excitern kann mit einer Bandbreite von ca. 1 GHz gerechnet werden, die kontinuierlich betreibbar ist, wobei Doppler, Phase und Amplitude, samplegenau einstellbar sind. Die maximale Bandbreite von 1 GHz lässt sich in Stufen von 500 MHz, 250 MHz, 125 MHz und 16 MHz reduzieren. Eine reduzierte Abtastrate führt zu mehr virtuellen Excitern, so dass beispielsweise mit bis zu 48 virtuellen Excitern gerechnet werden kann. Entsprechend einem weiteren Ausführungsbeispiel ist die Verteilung bzw. die virtuellen Excitern 120‴k1 bis 120‴kn sind dazu ausgebildet, um Lücken zwischen den Pulsen oder halbgefüllte Frames mit Nullen aufzufüllen, so dass ein kontinuierlicher Datenstrom weiterhin erhalten bleibt.

Entsprechend einem Ausführungsbeispiel kann ein theoretisch möglicher Datendurchsatz bei 16 Bit Wortbreite von ca. 250 GBit ohne Berücksichtigung von Steuerdaten erreicht werden. Reduziert man die Auflösung auf 8, würde die Datenrate ebenfalls wieder ohne Steuerdaten auf die Hälfte reduziert. Ein weiterer begrenzender Faktor ist die Datenzuspielung, beispielsweise über acht 10-Gigabit-Schnittstellen. Um diese Begrenzung aufzuheben, kann entsprechend einem weiteren Ausführungsbeispiel ein 40-Gigabit-Interface oder ein anderes Interface mit höherem Datendurchsatz eingesetzt werden, so dass der begrenzende Faktor dann in die Datengenerierung verschoben wird.

Wie bereits oben erläutert, kann dieser begrenzende Faktor dadurch überwunden werden, dass die Datengenerierung in voneinander unabhängigen Datenquellen, insbesondere unabhängig von der Signalerzeugung erfolgt.

Zur Datengenerierung: Jedes Radar wird in Software durch ein entsprechendes Radar-"Objekt" repräsentiert, das eine unabhängige Datenquelle darstellt. Jedes Radar-Objekt kennt seine Signalformen, die simulierte Zeit und die aktuelle räumliche Orientierung sowie Pfaddämpfung zwischen seinem Radar und dem DUT. Wenn ein Puls des DUTs generiert werden soll, generiert das Radar-Objekt ein Datenpaket im Sinne eines PWDs (Pulse Word Descriptor) und kann entsprechend Ausführungsbeispielen beispielsweise einen oder alle der folgenden Inhalte umfassen:
- Zieladresse, die den gewünschten HF-Ausgang und Frequenzbereich beschreibt
- Metadaten, z. B. genauer Aussendezeitpunkt, Abtastrate, Mittenfrequenz, Pegel, Phase, Signalform (Puls oder kontinuierlich), ID des Radar-Objekts
- zu sendende IQ-Daten

Die PWDs werden als UDP-Pakete zu einem leistungsfähigen Netzwerkswitch geschickt, der die Datenkollision vermeidet. Falls erforderlich, verteilt er mittels Multicast den PWD an mehrere betroffene DSP-Karten, wenn das Signal im Bereich einer Überlappung gesendet werden soll. Anhand der ID können DSP-Karten auswerten, wie viele Pakete bis zu einem bestimmten Zeitpunkt von einem Radar-Objekt empfangen wurden, um gegebenenfalls auftretende Paketverluste zu identifizieren. Dieses Konzept in der Datengenerierung weist den Vorteil einer klaren Trennung zwischen Datengenerierung und Datenerzeugung auf und führt dadurch zur Informationssicherheit. Des Weiteren ist das Konzept skalierbar bezüglich Anzahl der Radar-Objekte und deren Verteilung auf die Berechnungs-Hardware. Zukunftssicherheit ist durch Verwendung von Standardinterfaces bzw. auch teilweise Standardhardware gegeben.

Nachfolgend wird die Analogseite des Hochfrequenzsignal-Stimulators genauer beleuchtet: ein weiterer Vorteil in Bezug auf die Analogtechnik ist, dass guter Signal-Rausch-Abstand zu erwarten ist, insbesondere dann, wenn die entsprechenden DA-Umsetzer zum Einsatz kommen. Auch bietet der analoge Teil Vorteile hinsichtlich der Frequenzgenauigkeit und der Frequenzumschaltzeit, die hier vernachlässigbar klein ist. Die Signale sind darüber hinaus vollständig frei modellierbar, wobei sowohl synthetische Signale als auch aufgezeichnete Signale abspielbar sind.

Ein weiteres Ausführungsbeispiel bezieht sich auf die Signalverarbeitung selbst (mit und auch ohne Beschränkung der Anzahl der Datenerzeuger), die ausgebildet ist, um auf Basis der Inhalte der Datenpakete einen kontinuierlichen Datenstrom zu erzeugen und/oder im Falle eines nicht-kontinuierlichen Datenstroms bzw. eines unvollständigen Frames die Lücken zwischen den einzelnen Signalen oder zumindest das einzelnen Frame mit Nullen aufzufüllen. Dieser aufgefüllte (ggf. sogar nun kontinuierliche) Datenstrom kann dem Signalgenerator zur Verfügung gestellt werden, wobei sichergestellt ist, dass zumindest die Frames vollständig sind.

Ein weiteres Ausführungsbeispiel bezieht sich auf die Signalverarbeitung (mit und auch ohne Beschränkung der Anzahl der Datenerzeuger), wie z.B. einen FPGA, die ausgebildet ist, mehrere Signale (z.B. für mehrere Radarobjekte) parallel (im Sinne von zeitgleich) zu verarbeiten. Hierbei können, wie oben beschrieben z.B. mehrere virtuelle Exciter generiert / verarbeitet werden. Die Verarbeitung im Prozessor kann z.B. auf dem Konzept der schnellen Faltung erfolgen.

Ein weiteres Ausführungsbeispiel bezieht sich auf den Signalgenerator (mit und auch ohne Beschränkung der Anzahl der Datenerzeuger), bei dem das Hochfrequenzsignal verteilt über mehrere Frequenzbänder, die aneinander überlappen, erzeugt werden. Hier können beispielsweise zwei oder mehr Signalgeneratoreinheiten mit sich überlappenden Frequenzbereichen vorgesehen sein.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahingehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahingehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahingehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Hochfrequenzsignal-Stimulator-System (100) mit folgenden Merkmalen:
mindestens zwei voneinander unabhängigen Datenerzeugern (130a, 130b, 130'a-130'n), die jeweils ausgebildet sind, zumindest ein ein zu erzeugendes Hochfrequenzsignal als Radar-Objekt beschreibendes Datenpaket (132a, 132b) mit IQ-Daten zu erzeugen;
eine Signalverarbeitung (120, 120', 120‴), die ausgebildet ist, um einen Inhalt des von dem ersten der mindestens zwei voneinander unabhängigen Datenerzeuger (130a, 130b, 130'a-130'n) erzeugten Datenpakets (132a, 132b) und einen Inhalt des von dem zweiten der mindestens zwei voneinander unabhängigen Datenerzeuger (130a, 130b, 130'a-130'n) erzeugten Datenpakets (132a, 132b) zu extrahieren; und
einen Signalgenerator (110, 110'), der ausgebildet ist, um auf Basis der extrahierten Inhalte ein Hochfrequenzsignal zu erzeugen;
wobei das zumindest eine Datenpaket (132a, 132b) IQ-Daten zugeordnet zu zumindest zwei oder mehreren Frequenzbändern umfasst und wobei der Signalgenerator (110, 110') ausgebildet ist, um das Hochfrequenzsignal über die zumindest zwei oder mehreren Frequenzbänder, die aneinander angrenzen oder überlappen, zu erzeugen; oder wobei das zumindest eine Datenpaket (132a, 132b) IQ-Daten zugeordnet zu zumindest zwei oder mehreren Frequenzbändern umfasst und wobei der Signalgenerator (110, 110') zumindest zwei Signalgeneratoreinheiten (112a, 112b, 112'a-112'n, 112"a-112"k) für zumindest zwei der zumindest zwei oder mehreren Frequenzbänder umfasst, die aneinander angrenzen oder überlappen;
wobei die mindestens zwei voneinander unabhängigen Datenerzeuger (130a, 130b, 130'a-130'n) voneinander unabhängig betriebene und in einem Netzwerk verteilte Computer sind,
wobei die Signalverarbeitung (120, 120', 120‴) einen Netzwerkswitch umfasst, über welchen die mindestens zwei voneinander unabhängigen Datenerzeuger (130a, 130b, 130'a-130'n) an die Signalverarbeitung (120, 120', 120‴) ankoppelbar sind.

2. Hochfrequenzsignal-Stimulator-System (100) gemäß Anspruch 1, wobei die Signalverarbeitung (120, 120', 120‴) ausgebildet ist, die IQ-Daten des Datenpakets (132a, 132b), zugehörig zu einem ersten Frequenzband, einer ersten Signalgeneratoreinheit (112a) zuzuweisen und die IQ-Daten desselben Datenpakets (132a, 132b), zugehörig zu einem zweiten Frequenzband, einer zweiten Signalgeneratoreinheit (112b) zuzuweisen.

3. Hochfrequenzsignal-Stimulator-System (100) gemäß Anspruch 1 oder 2, wobei der Signalgenerator (110, 110') je Frequenzband zwei oder mehr Signalgeneratoreinheiten (112a, 112b, 112'a-112'n, 112"a-112"k) umfasst.

4. Hochfrequenzsignal-Stimulator-System (100) gemäß einem der vorherigen Ansprüche, wobei der Signalgenerator (110, 110') einen Filter-Combiner (116, 116") umfasst, der ausgebildet ist, um Ausgangssignale von den zumindest zwei Signalgeneratoreinheiten (112a, 112b, 112'a-112'n, 112"a-112"k) zu kombinieren, um ein Hochfrequenzsignal mit einer Gesamtbandbreite, umfassend die Summe der mindestens zwei Frequenzbänder oder zumindest die mindestens zwei überlappenden Frequenzbänder, zu erhalten.

5. Hochfrequenzsignal-Stimulator-System (100) gemäß einem der vorhergehenden Ansprüche, wobei der Signalgenerator (110, 110') mindestens eine Signalgeneratoreinheit (112a, 112b, 112'a-112'n, 112"a-112"k) umfasst, die einen Digital-Analog-Wandler in Kombination mit einem Frequenzumsetzer aufweist, wobei der Digital-Analog-Wandler ausgebildet ist, um ausgehend von den Inhalten der erzeugten Datenpakete (132a, 132b) ein Analogsignal bereitzustellen, und wobei der Frequenzumsetzer ausgebildet ist, um das bereitgestellte Analogsignal in einen anderen Frequenzbereich zu transferieren.

6. Hochfrequenzsignal-Stimulator-System (100) gemäß Anspruch 5, wobei die Signalgeneratoreinheit (112a, 112b, 112'a-112'n, 112"a-112"k) zumindest eine dem Frequenzumsetzer nachgeschaltete Verstärker-Abschwächungs-Einheit umfasst, die ausgebildet ist, um das analoge Signal zu verstärken und/oder zu dämpfen.

7. Hochfrequenzsignal-Stimulator-System (100) gemäß einem der vorhergehenden Ansprüche, wobei die Signalverarbeitung (120, 120', 120‴) ausgebildet ist, beim Extrahieren zumindest einen Aussendezeitpunkt und eine Signaldauer zu extrahieren und um die Inhalte der Datenpakete (132a, 132b) entsprechend dem Aussendezeitpunkt und der Signaldauer anzuordnen, um einen kontinuierlichen Datenstrom auszugeben; und/oder
wobei die Signalverarbeitung (120, 120', 120‴) ausgebildet ist, um auf Basis der Inhalte der Datenpakete (132a, 132b) einen kontinuierlichen Datenstrom zu erzeugen und/oder im Falle eines nicht-kontinuierlichen Datenstroms Lücken zwischen den einzelnen Signalen oder Frames eines Signals mit Nullen aufzufüllen.

8. Hochfrequenzsignal-Stimulator-System (100) gemäß einem der vorhergehenden Ansprüche, wobei die Signalverarbeitung (120, 120', 120‴) ausgebildet ist, um die Inhalte der Datenpakete (132a, 132b) zu analysieren und zu interpolieren; und/oder
wobei die Signalverarbeitung (120, 120', 120‴) ausgebildet ist, um die Inhalte der Datenpakete (132a, 132b) entsprechend ihrer Frequenzbereiche unterschiedlichen Frequenzbändern des Signalgenerators (110, 110') zuzuordnen; und/oder
wobei die Signalverarbeitung (120, 120', 120‴) ausgebildet ist, um mehrere virtuelle Exciter (120‴k1-120‴kn) zu simulieren und die Datenpakete (132a, 132b) entsprechend ihrem Inhalt zu einem der virtuellen Exciter (120‴k1-120‴kn) zuzuordnen; oder
wobei die Signalverarbeitung (120, 120', 120‴) ausgebildet ist, um mehrere virtuelle Exciter (120‴k1-120‴kn) zu simulieren und die Datenpakete (132a, 132b) entsprechend ihrem Inhalt zu einem der virtuellen Exciter (120‴k1-120‴kn) zuzuordnen und wobei die Signalverarbeitung (120, 120', 120‴) ausgebildet ist, um die Anzahl und/oder die Bandbreite der mehreren virtuellen Exciter (120‴k1-120‴kn) zu variieren, um die Gesamtbandbreite mit einer variierenden Anzahl an virtuellen Excitern (120‴k1-120‴kn) abzubilden.

9. Hochfrequenzsignal-Stimulator-System (100) gemäß einem der vorhergehenden Ansprüche, wobei die Signalverarbeitung (120, 120', 120‴) einen FPGA oder Prozessor umfasst, der auf Basis der Inhalte der Datenpakete (132a, 132b) einen Datenstrom und/oder einen kontinuierlichen Datenstrom ausgibt.

10. Hochfrequenzsignal-Stimulator-System (100) gemäß einem der vorhergehenden Ansprüche, wobei die Inhalte der erzeugten Datenpakete (132a, 132b) zumindest ein Element aus der Gruppe umfassend IQ-Daten, eine Zieladresse, einen Frequenzbereich, einen Aussendezeitpunkt, eine Signaldauer und einen Signalpegel aufweisen.

11. Verfahren zum Stimulieren eines Hochfrequenzsignals mit folgenden Schritten:
Erzeugen eines ein zu erzeugendes Hochfrequenzsignal beschreibendes Datenpaket (132a, 132b) mit IQ-Daten als Radar-Objekt mit einem ersten von mindestens zwei voneinander unabhängigen Datenerzeugern (130a, 130b, 130'a-130'n) sowie Erzeugen eines ein zu erzeugendes Hochfrequenzsignal beschreibendes Datenpaket (132a, 132b) mit IQ-Daten als Radar-Objekt mit einem zweiten von zwei unabhängigen Datenerzeugern (130a, 130b, 130'a-130'n);
Extrahieren der Inhalte des von dem ersten der mindestens zwei voneinander unabhängigen Datenerzeuger (130a, 130b, 130'a-130'n) erzeugten Datenpakets (132a, 132b) und des von dem zweiten der mindestens zwei voneinander unabhängigen Datenerzeuger (130a, 130b, 130'a-130'n) erzeugten Datenpakets (132a, 132b); und
Erzeugen eines Hochfrequenzsignals auf Basis der extrahierten Inhalte unter Zuhilfenahme eines Signalgenerators (110, 110');
wobei das zumindest eine Datenpaket (132a, 132b) IQ-Daten zugeordnet zu zumindest zwei oder mehreren Frequenzbändern umfasst und wobei das Hochfrequenzsignal über die zumindest zwei oder mehreren Frequenzbänder, die aneinander angrenzen oder überlappen, erzeugt wird; oder wobei das zumindest eine Datenpaket (132a, 132b) IQ-Daten zugeordnet zu zumindest zwei oder mehreren Frequenzbändern umfasst und wobei zumindest zwei Signalgeneratoreinheiten (112a, 112b, 112'a-112'n, 112"a-112"k) für zumindest zwei der zumindest zwei oder mehreren Frequenzbänder verwendet werden, die aneinander angrenzen oder überlappen;
wobei die mindestens zwei voneinander unabhängigen Datenerzeuger (130a, 130b, 130'a-130'n) voneinander unabhängig betriebene und in einem Netzwerk verteilte Computer sind; die über einen Netzwerkswitch angekoppelt sind.

12. Verfahren gemäß Anspruch 11, wobei beim Extrahieren des Inhalts des von dem ersten der mindestens zwei zueinander unabhängigen Datenerzeuger (130a, 130b, 130'a-130'n) erzeugten Datenpakets (132a, 132b) und des Inhalts des von dem zweiten der mindestens zwei voneinander unabhängigen Datenerzeuger (130a, 130b, 130'a-130'n) erzeugten Datenpakets (132a, 132b) entsprechend ihrem Aussendezeitpunkt und ihrer Signaldauer geordnet werden und/oder entsprechend ihrem Frequenzbereich zu ein oder mehreren von mindestens zwei Bändern des Signalgenerators (110, 110') zugeordnet werden.

13. Verfahren gemäß Anspruch 11 oder 12, wobei beim Extrahieren zumindest zwei virtuelle Exciter (120‴k1-120‴kn) simuliert werden und die Inhalte der Datenpakete (132a, 132b) zu den virtuellen Excitern (120‴k1-120‴kn) zugeordnet werden.

14. Verfahren gemäß einem der Ansprüche 11 bis 13, wobei beim Extrahieren der Inhalte zu einem kontinuierlichen Datenstrom angeordnet wird und im Fall eines nichtkontinuierlichen Datenstroms Lücken zwischen Einzelsignalen mit Nullen oder zumindest ein Frame aufgefüllt werden.

15. Computerprogramm zur Durchführung eines der Verfahren nach einem der Ansprüche 11 bis 14, wenn das Programm auf einem Computer abläuft.

## Claims

1. A high-frequency signal stimulator system (100) comprising:
at least two mutually independent data producers (130a, 130b, 130'a-130'n), each configured to produce at least one data packet (132a, 132b), describing a high-frequency signal as a radar object to be produced, having IQ data;
signal processing (120, 120', 120‴) configured to extract contents of the data packet (132a, 132b) produced by the first of the at least two mutually independent data producers (130a, 130b, 130'a to 130'n) and contents of the data packet (132a, 132b) produced by the second of the at least two mutually independent data producers (130a, 130b, 130'a-130'n); and
a signal generator (110, 110') configured to produce a high-frequency signal based on the extracted contents;
wherein the at least one data packet (132a, 132b) comprises IQ data associated to at least two or several frequency bands and wherein the signal generator (110, 110') is configured to produce the high-frequency signal over the at least two or several frequency bands which are adjacent to one another or overlap one another; or wherein the at least one data packet (132a, 132b) comprises IQ data associated to at least two or several frequency bands and wherein the signal generator (110, 110') comprises at least two signal generator units (112a, 112b, 112'a-112'n, 112"a-112"k) for at least two of the at least two or several frequency bands which are adjacent to one another or overlap one another;
wherein the at least two mutually independent data producers (130a, 130b, 130'a-130'n) are mutually independently operated computers distributed in a network,
wherein the signal processing (120, 120', 120‴) comprises a network switch via which the at least two mutually independent data producers (130a, 130b, 130'a-130'n) can be coupled to the signal processing (120, 120', 120‴).

2. The high-frequency signal stimulator system (100) in accordance with claim 1 wherein the signal processing (120, 120', 120‴) is configured to associate the IQ data of the data packet (132a, 132b), belonging to a first frequency band, to a first signal generator unit (112a) and to associate the IQ data of the same data packet (132a, 132b), belonging to a second frequency band, to a second signal generator unit (112b).

3. The high-frequency signal stimulator system (100) in accordance with claim 1 or 2, wherein the signal generator (110, 110') comprises, per frequency band, two or more signal generator units (112a, 112b, 112'a-112'n, 112"a-112"k).

4. The high-frequency signal stimulator system (100) in accordance with any one of the preceding claims, wherein the signal generator (110, 110') comprises a filter combiner (116, 116") configured to combine output signals from the at least two signal generator units (112a, 112b, 112'a-112'n, 112"a-112"k) in order to obtain a high-frequency signal having an overall bandwidth, comprising the sum of the at least two frequency bands or at least the at least two overlapping frequency bands.

5. The high-frequency signal stimulator system (100) in accordance with any of the preceding claims, wherein the signal generator (110, 110') comprises at least one signal generator unit (112a, 112b, 112'a-112'n, 112"a-112"k) comprising a digital-to-analog converter in combination with a frequency converter, wherein the digital-to-analog converter is configured to provide an analog signal starting from the contents of the produced data packets (132a, 132b), and wherein the frequency converter is configured to transfer the provided analog signal in another frequency range.

6. The high-frequency signal stimulator system (100) in accordance with claim 5, wherein the signal generator unit (112a, 112b, 112'a-112'n, 112"a-112"k) comprises at least one amplifier-attenuation unit downstream of the frequency converter, configured to amplify and/or attenuate the analog signal.

7. The high-frequency signal stimulator system (100) in accordance with any of the preceding claims, wherein the signal processing (120, 120', 120‴) is configured to extract, when extracting, at least one emission point in time and a signal duration and to arrange the contents of the data packets (132a, 132b) in correspondence with the emission point in time and the signal duration in order to output a continuous data stream; and/or
wherein the signal processing (120, 120', 120‴) is configured to produce a continuous data stream based on the contents of the data packets (132a, 132b) and/or to fill, in the case of a non-continuous data stream, gaps between the individual signals or frames of a signal with zeros.

8. The high-frequency signal stimulator system (100) in accordance with any of the preceding claims, wherein the signal processing (120, 120', 120‴) is configured to analyze and interpolate the contents of the data packets (132a, 132b); and/or
wherein the signal processing (120, 120', 120‴) is configured to associate the contents of the data packets (132a, 132b) to different frequency bands of the signal generator (110, 110') in correspondence with their frequency ranges; and/or,
wherein the signal processing (120, 120', 120‴) is configured to simulate several virtual exciters (120‴k1-120‴kn) and to associate the data packets (132a, 132b) to one of the virtual exciters (120‴k1-120‴kn) in correspondence with their contents; or
wherein the signal processing (120, 120', 120‴) is configured to simulate several virtual exciters (120‴k1-120‴kn) and to associate the data packets (132a, 132b) to one of the virtual exciters (120‴k1-120‴kn) in correspondence with their contents, and wherein the signal processing (120, 120', 120‴) is configured to vary the number and/or the bandwidth of several virtual exciters (120‴k1-120‴kn) in order to map the entire bandwidth with a varying number of virtual exciters (120‴k1-120‴kn).

9. The high-frequency signal stimulator system (100) in accordance with any of the preceding claims, wherein the signal processing (120, 120', 120‴) comprises an FPGA or processer outputting a data stream and/or a continuous data stream based on the contents of the data packets (132a, 132b).

10. The high-frequency signal stimulator system (100) in accordance with any of the preceding claims, wherein the contents of the produced data packets (132a, 132b) comprise at least one element from the group comprising IQ data, a target address, a frequency range, an emission point in time, a signal duration and a signal level.

11. A method for stimulating a high-frequency signal, comprising:
producing a data packet (132a, 132b), describing a high-frequency signal to be produced, having IQ data as a radar object by a first of at least two mutually independent data producers (130a, 130b, 130'a-130'n), and producing a data packet (132a, 132b), describing a high-frequency signal to be produced, having IQ data as a radar object by a second of two independent data producers (130a, 130b, 130'a-130'n);
extracting the contents of the data packet (132a, 132b) produced by the first of the at least two mutually independent data producers (130a, 130b, 130'a-130'n) and the data packet (132a, 132b) produced by the second of the at least two mutually independent data producers (130a, 130b, 130'a-130'n); and
producing a high-frequency signal based on the extracted contents using a signal generator (110, 110');
wherein the at least one data packet (132a, 132b) includes IQ data associated to at least two or several frequency bands and wherein the high-frequency signal is produced over the at least two or several frequency bands which are adjacent to one another or overlap one another; or wherein the at least one data packet (132a, 132b) includes IQ data associated to at least two or several frequency bands and wherein at least two signal generator units (112a, 112b, 112'a-112'n, 112"a-112"k) for at least two of the at least two or several frequency bands which are adjacent to one another or overlap one another are used;
wherein the at least two mutually independent data producers (130a, 130b, 130'a-130'n) are mutually independently operated computers distributed over a network, which are coupled via a network switch.

12. The method in accordance with claim 11, wherein, when extracting the contents of the data packet (132a, 132b) produced by the first of the at least two mutually independent data producers (130a, 130b, 130'a-130'n) and the contents of the data packet (132a, 132b) produced by the second of the at least two mutually independent data producers (130a, 130b, 130'a-130'n), these are ordered in correspondence with their emission point in time and their signal duration and/or associated to one or several of at least two bands of the signal generator (110, 110') in correspondence with their frequency range.

13. The method in accordance with claim 11 or 12, wherein, when extracting, at least two virtual exciters (120‴k1-120‴kn) are simulated and the contents of the data packets (132a, 132b) are associated to the virtual exciters (120‴k1-120‴kn).

14. The method in accordance with any of claims 11 to 13, wherein, when extracting, the contents are arranged to form a continuous data stream and, in the case of a non-continuous data stream, gaps between individual signals are filled with zeros, or at least one frame.

15. A computer program for performing one of the methods in accordance with any of claims 11 to 14 when the program runs on a computer.

## Revendications

1. Système de stimulateur de signal de haute fréquence (100) aux caractéristiques suivantes:
au moins deux générateurs de données (130a, 130b, 130'a à 130'n) indépendants l'un de l'autre qui sont conçus, chacun, pour générer au moins un signal de haute fréquence à générer comme un paquet de données (132a, 132b) avec des données IQ décrivant un objet de radar;
un moyen de traitement de signal (120, 120', 120‴) qui est conçu pour extraire un contenu du paquet de données (132a, 132b) généré par le premier des au moins deux générateurs de données (130a, 130b, 130'a à 130'n) indépendants l'un de l'autre et un contenu du paquet de données (132a, 132b) généré par le deuxième des au moins deux générateurs de données (130a, 130b, 130'a à 130'n) indépendants l'un de l'autre; et
un générateur de signal (110, 110') qui est configuré pour générer un signal de haute fréquence sur base des contenus extraits;
dans lequel l'au moins un paquet de données (132a, 132b) comporte des données IQ associées à au moins deux ou plusieurs bandes de fréquences et dans lequel le générateur de signal (110, 110') est conçu pour générer le signal de haute fréquence sur les au moins deux ou plusieurs bandes de fréquences qui sont adjacentes l'une à l'autre ou se chevauchent; ou dans lequel l'au moins un paquet de données (132a, 132b) comporte des données IQ associées à au moins deux ou plusieurs bandes de fréquences et dans lequel le générateur de signal (110, 110') comporte au moins deux unités de générateur de signal (112a, 112b, 112'a à 112'n, 112"a à 112"k) pour au moins deux des au moins deux ou plusieurs bandes de fréquences qui sont adjacentes l'une à l'autre ou se chevauchent;
dans lequel les au moins deux générateurs de données (130a, 130b, 130'a à 130'n) indépendants l'un de l'autre sont des ordinateurs fonctionnant indépendamment l'un de l'autre et répartis dans un réseau,
dans lequel le moyen de traitement de signal (120, 120', 120‴) comporte un commutateur de réseau par l'intermédiaire duquel les au moins deux générateurs de données (130a, 130b, 130'a à 130'n) indépendants l'un de l'autre peuvent être couplés au moyen de traitement de signal (120, 120', 120‴).

2. Système de stimulateur de signal haute fréquence (100) selon la revendication 1, dans lequel le moyen de traitement de signal (120, 120', 120‴) est conçu pour associer les données IQ du paquet de données (132a, 132b) appartenant à une première bande de fréquences à une première unité de générateur de signal (112a) et pour associer les données IQ du même paquet de données (132a, 132b) appartenant à une deuxième bande de fréquences à une deuxième unité de générateur de signal (112b).

3. Système de stimulateur de signal de haute fréquence (100) selon la revendication 1 ou 2, dans lequel le générateur de signal (110, 110') comporte, par bande de fréquences, deux ou plusieurs unités de générateur de signal (112a, 112b, 112'a à 112'n, 112"a à 112"k).

4. Système de stimulateur de signal de haute fréquence (100) selon l'une des revendications précédentes, dans lequel le générateur de signal (110, 110') comporte un combineur à filtre (116, 116") qui est conçu pour combiner les signaux de sortie des au moins deux unités de générateur de signal (112a, 112b, 112'a à 112'n, 112"a à 112"k) pour obtenir un signal de haute fréquence avec une largeur de bande totale comprenant la somme des au moins deux bandes de fréquences ou au moins des au moins deux bandes de fréquences se chevauchant.

5. Système de stimulateur de signal de haute fréquence (100) selon l'une des revendications précédentes, dans lequel le générateur de signal (110, 110') comporte au moins une unité de générateur de signal (112a, 112b, 112'a à 112'n, 112"a à 112"k) qui présente un convertisseur numérique-analogique en combinaison avec un convertisseur de fréquence, dans lequel le convertisseur numérique-analogique est conçu pour fournir, en partant des contenus des paquets de données (132a, 132b) générés, un signal analogique, et dans lequel le convertisseur de fréquence est conçu pour transférer le signal analogique fourni à une autre plage de fréquences.

6. Système de stimulateur de signal de haute fréquence (100) selon la revendication 5, dans lequel l'unité de générateur de signal (112a, 112b, 112'a à 112'n, 112"a à 112"k) comporte au moins une unité d'atténuation d'amplificateur connectée en aval du convertisseur de fréquence qui est conçue pour amplifier et/ou pour atténuer le signal analogique.

7. Système de stimulateur de signal haute fréquence (100) selon l'une des revendications précédentes, dans lequel le moyen de traitement de signal (120, 120', 120‴) est conçu pour extraire, lors de l'extraction, au moins un moment d'émission et une durée de signal et pour ordonner les contenus des paquets de données (132a, 132b) selon le moment d'émission et la durée de signal pour sortir un flux de données continu; et/ou
dans lequel le moyen de traitement de signal (120, 120', 120‴) est conçu pour générer, sur base des contenus des paquets de données (132a, 132b), un flux de données continu et/ou, dans le cas d'un flux de données non continu, pour remplir les trous entre les signaux ou trames individuels d'un signal par des zéros.

8. Système de stimulateur de signal haute fréquence (100) selon l'une des revendications précédentes, dans lequel le moyen de traitement du signal (120, 120', 120‴) est conçu pour analyser et interpoler les contenus des paquets de données (132a, 132b); et/ou
dans lequel le moyen de traitement de signal (120, 120', 120‴) est conçu pour associer les contenus des paquets de données (132a, 132b) selon leurs plages de fréquences à différentes bandes de fréquences du générateur de signal (110, 110'); et/ou
dans lequel le moyen de traitement de signal (120, 120', 120‴) est conçu pour simuler plusieurs excitateurs virtuels (120‴k1 à 120‴kn) et pour associer les paquets de données (132a, 132b) selon leur contenu à l'un des excitateurs virtuels (120‴k1 à 120‴kn); ou
dans lequel le moyen de traitement de signal (120, 120', 120‴) est conçu pour simuler plusieurs excitateurs virtuels (120‴k1 à 120‴kn) et pour associer les paquets de données (132a, 132b) selon leur contenu à l'un des excitateurs virtuels (120‴k1 à 120‴kn) et dans lequel le moyen de traitement de signal (120, 120', 120‴) est conçu pour faire varier le nombre et/ou la largeur de bande des plusieurs excitateurs virtuels (120‴k1 à 120‴kn) pour reproduire la largeur de bande totale avec un nombre variable aux excitateurs virtuels (120‴k1 à 120‴kn).

9. Système de stimulateur de signal de haute fréquence (100) selon l'une des revendications précédentes, dans lequel le moyen de traitement de signal (120, 120', 120‴) comporte un FPGA ou processeur qui, sur base des contenus des paquets de données (132a, 132b), sort un flux de données et/ou un flux de données continu.

10. Système de stimulateur de signal de haute fréquence (100) selon l'une des revendications précédentes, dans lequel les contenus des paquets de données générés (132a, 132b) présentent au moins un élément du groupe comprenant des données IQ, une adresse cible, une plage de fréquences, un moment d'émission, une durée de signal et un niveau de signal.

11. Procédé de stimulation d'un signal de haute fréquence aux étapes suivantes consistant à:
générer un paquet de données (132a, 132b) avec des données IQ décrivant un signal de haute fréquence à générer comme objet de radar avec un premier parmi au moins deux générateurs de données (130a, 130b, 130'a à 130'n) indépendants l'un de l'autre ainsi que générer un paquet de données (132a, 132b) avec des données IQ décrivant un signal de haute fréquence à générer comme objet de radar avec un deuxième parmi deux générateurs de données (130a, 130b, 130'a à 130'n) indépendants l'un de l'autre;
extraire les contenus du premier paquet de données (132a, 132b) généré par le premier des au moins deux générateurs de données (130a, 130b, 130'a à 130'n) indépendants l'un de l'autre et du paquet de données (132a, 132b) généré par le deuxième des au moins deux générateurs de données (130a, 130b, 130'a à 130'n) indépendants l'un de l'autre; et
générer un signal de haute fréquence sur base des contenus extraits à l'aide d'un générateur de signal (110, 110');
dans lequel l'au moins un paquet de données (132a, 132b) comporte des données IQ associées à au moins deux ou plusieurs bandes de fréquences et dans lequel le signal de haute fréquence est généré sur les au moins deux ou plusieurs bandes de fréquences qui sont adjacentes l'une à l'autre ou se chevauchent; ou dans lequel l'au moins un paquet de données (132a, 132b) comporte des données IQ associées à au moins deux ou plusieurs bandes de fréquences et dans lequel au moins deux unités de générateur de signal (112a, 112b, 112'a à 112'n, 112"a à 112"k) sont utilisées pour au moins deux des au moins deux ou plusieurs bandes de fréquences qui sont adjacentes l'une à l'autre ou se chevauchent;
dans lequel les au moins deux générateurs de données (130a, 130b, 130'a à 130'n) indépendants l'un de l'autre sont des ordinateurs fonctionnant indépendamment l'un de l'autre et répartis dans un réseau qui sont couplés par l'intermédiaire d'un commutateur de réseau.

12. Procédé selon la revendication 11, dans lequel, lors de l'extraction, le contenu du paquet de données (132a, 132b) généré par le premier des au moins deux générateurs de données (130a, 130b, 130'a à 130'n) indépendants l'un de autre et le contenu du paquet de données (132a, 132b) généré par le deuxième des au moins deux générateurs de données (130a, 130b, 130'a à 130'n) indépendants l'un de autre sont ordonnés selon leur moment d'émission et leur durée de signal et/ou sont associés, selon leur plage de fréquences, à une ou plusieurs d'au moins deux bandes du générateur de signal (110, 110').

13. Procédé selon la revendication 11 ou 12, dans lequel sont simulés, lors de l'extraction, au moins deux excitateurs virtuels (120‴k1 à 120‴kn) et les contenus des paquets de données (132a, 132b) sont associés aux excitateurs virtuels (120‴k1 à 120‴kn).

14. Procédé selon l'une des revendications 11 à 13, dans lequel, lors de l'extraction, les contenus sont ordonnés pour obtenir un flux de données continu et, dans le cas d'un flux de données non continu, les trous entre signaux individuels ou d'au moins une trame sont remplis de zéros.

15. Programme d'ordinateur pour la mise en œuvre de l'un des procédés selon l'une des revendications 11 à 14 lorsque le programme est exécuté sur un ordinateur.
